# EUROPÄISCHE PATENTSCHRIFT

(11) **EP 1 180 320 B1**
(45) Veröffentlichungstag und Bekanntmachung des Hinweises auf die Patenterteilung: **21.06.2006**
(21) Anmeldenummer: 01118764.8
(22) Anmeldetag: 08.08.2001
(51) Int. Cl.: A01D 34/64, A01D 34/68, F16D 13/40

(54) **Rasentraktor**
Lawn tractor
Tracteur-tondeuse

(30) Priorität: 16.08.2000 DE 20014087 U
(43) Veröffentlichungstag der Anmeldung: 20.02.2002
(73) Patentinhaber: Bauer, Frank, 91781 Weissenburg (DE)
(72) Erfinder: Bauer, Frank, 91781 Weissenburg (DE)
(74) Vertreter: Witzany, Manfred

(56) Entgegenhaltungen:
- DE-U- 9 315 842
- DE-U- 20 007 388
- DE-U- 20 014 087
- FR-A- 1 263 233
- US-A- 2 706 545
- US-A- 2 993 329
- US-A- 3 871 159
- US-A- 5 117 617

## Beschreibung

Die Erfindung betrifft einen Rasentraktor gemäß dem Oberbegriff des Patentanspruchs 1.

Aus der Praxis sind Rasentraktoren bekannt, die aus einem Rahmen bestehen, an dem ein Motor mit vertikaler Antriebswelle abgestützt ist. Diese Antriebswelle treibt ein Mähwerkzeug an, das gleichzeitig wie ein Gebläse wirkt, das das Mähgut aufsaugt und in einem Fangkorb sammelt. Die bedienende Person sitzt dabei auf einem am Rasentraktor abgestützten Sitz, so daß diese mit dem Rasentraktor mitfahren kann. Es hat sich jedoch herausgestellt, daß Rasentraktoren die meiste Zeit ungenutzt bleiben, da zum Anschluß weiterer Arbeitsgeräte keinerlei Mittel vorgesehen sind.

Aus dem deutschen Gebrauchsmuster DE-U-93 15 842 ist eine Vorrichtung zum Betrieb eines Schredders an einem Benzinrasenmäher bekannt. Diese Vorrichtung weist einen Benzinmotor auf, der mit einer vertikal ausgerichteten Zapfwelle in Wirkverbindung steht. Von dieser Zapfwelle kann über eine Gelenkwelle ein Schredder angetrieben werden, um die Verwendbarkeit des Rasenmähers zu erweitern. Diese Zapfwelle besitzt jedoch keinerlei Kupplung zum Benzinmotor, so daß das Anbringen des Schredders auf dem Rasenmäher relativ aufwendig ist. Außerdem belastet der Schredder über die Zapfwelle auch die Antriebswelle des Benzinmotors in radialer Richtung, die für diese Belastungen im allgemeinen nicht ausreichend gelagert ist.

Aus der US 3,871,159 ist eine Scheibenkupplung für Rasenmäher bekannt. Diese Kupplung weist zwei Scheiben auf, von denen eine mit einer Motorwelle in drehmomentübertragender Wirkverbindung steht. Die andere Scheibe ist auf einer Achse drehbar und axial verschiebbar gehalten, wobei die Achse fest im Rahmen des Rasenmähers abgestützt ist. Die fest mit der Motorwelle verbundene Kupplungsscheibe ist jedoch nicht auf der genannten Achse gelagert, so daß schädliche Seitenkräfte auf die Motorwelle übertragen werden könnten.

Aus der gattungsgemäßen deutschen Gebrauchsmusterschrift DE-U-200 07 388 ist eine Antriebsvorrichtung für zusatzgeräte an Rasenmähern bekannt. Diese Antriebsvorrichtung weist eine Kupplung auf, über die das Drehmoment eines Benzinmotors auf ein Winkelgetriebe übertragen wird. Von diesem Winkelgetriebe verläuft eine Gelenkwelle zu den Arbeitswerkzeugen, um diese anzutreiben. Auch bei dieser bekannten Antriebsvorrichtung besteht der Nachteil, daß die Antriebswelle des Benzinmotors in Radialrichtung belastet wird, was die Lebensdauer des Benzinmotors beeinträchtigen kann.

Der Erfindung liegt die Aufgabe zugrunde, einen Rasentraktor der eingangs genannten Art derart auszubilden, daß Arbeitsgeräte vom Motor des Rasentraktors antreibbar sind, wobei die Belastung der Lager der Antriebswelle des Motors klein bleiben soll.

Diese Aufgabe wird erfindungsgemäß mit den Merkmalen des Patentanspruchs 1 gelöst.

Der Rasentraktor gemäß Anspruch 1 weist eine Kupplung auf, deren eine Kupplungsscheibe drehfest mit der vertikalen Antriebswelle des am Rahmen des Rasentraktors abgestützten Motors verbunden ist. Die andere Kupplungsscheibe steht vorzugsweise über Getriebe mit einer front- oder heckseitigen Zapfwelle in Wirkverbindung, von der die Motorleistung auf ein Arbeitsgerät übertragen werden kann. Damit ist es möglich, mit einem herkömmlichen Rasentraktor unterschiedliche Arbeitsgeräte zu betreiben, so daß der Rasentraktor universell einsetzbar ist. Durch die zwischen der Antriebswelle und die Zapfwelle geschaltete Kupplung kann das Arbeitsgerät bei laufendem Motor ein- bzw. ausgeschaltet werden, was insbesondere bei Arbeitsgeräten, die eine Unfallgefährdung bewirken können, von erheblicher Bedeutung ist. Außerdem kann das Arbeitsgerät sehr einfach auch bei laufendem Motor gewechselt werden, wenn der Kraftschluß zwischen dem Motor und dem Arbeitsgerät durch die Kupplung unterbrochen ist.

Die beiden Kupplungsscheiben der Kupplung sind auf einer fest am Rahmen gehaltenen Stützachse abgestützt. Damit werden insbesondere radiale Kräfte von der Antriebswelle des Motors ferngehalten. Dies ist bei Rasentraktoren von besonderer Bedeutung, da der Motor keinerlei radiale Kräfte auf die Antriebswelle verträgt und eine zusätzliche Lagerung der Antriebswelle aus Platzgründen im allgemeinen nicht realisierbar ist. Durch die feste Stützachse kann die Kupplung sehr einfach dicht gekapselt werden, so daß ein Eindringen von Mähgut in die Kupplung zuverlässig verhindert wird.

Um zusätzlich auch axiale Kräfte von der Antriebswelle des Motors fernzuhalten, ist es gemäß Anspruch 2 vorteilhaft, wenn die Stützachse an ihrem der Antriebswelle zugewandten Ende radial erweitert ist. An dieser radialen Erweiterung kann ein Lager axial fest abgestützt werden, über das axiale Zugkräfte auf die Stützachse übertragen werden. Damit wird insbesondere die von der axial verschiebbaren Kupplungsscheibe ausgeübte Schubkraft nicht auf die Antriebswelle übertragen, sondern über die Stützachse in den Rahmen abgeleitet.

Zur Abstützung der Kupplungsscheiben an der Stützachse haben sich gemäß Anspruch 3 Wälzlager bewährt. Insbesondere ist an Kugel-, Rollen-, Tonnen- und Kegellager gedacht, die einen ausreichend niedrigen Rollwiderstand bei gleichzeitig hoher Stützlast aufweisen. Zur Bildung einer guten axialen Führung der Kupplungsscheiben werden vorzugsweise zwei in axialer Richtung beabstandete Wälzlager eingesetzt, die vorzugsweise durch Zwischenringe zueinander auf Abstand gehalten sind. Insbesondere zur Abstützung der direkt mit der Antriebswelle des Motors verbundenen Kupplungsscheibe hat sich ein Doppelkugellager bewährt, das sich durch eine besonders gute radiale Abstützwirkung auszeichnet.

Im Gegensatz zur fest mit der Antriebswelle des Motors verbundenen Kupplungsscheibe muß die Gegenscheibe axial gegen die andere Kupplungsscheibe verschoben werden. Zur Übertragung dieser axialen Schubkraft könnte grundsätzlich auch ein Kugellager eingesetzt werden, das zur Übertragung kleinerer axialer Kräfte grundsätzlich ausreicht. Besser ist es jedoch, wenn gemäß Anspruch 4 die axial verschiebbare Kupplungsscheibe über Zylinder- oder Kegelrollenlager abgestützt ist, wobei die Rollenachsen spitze Winkel mit der Stützachse einschließen. Durch dieses Zylinder- oder Kegelrollenlager werden axiale Schubkräfte besonders wirkungsvoll auf die axial verschiebbare Kupplungsscheibe übertragen, wobei Abnützungserscheinungen am Lager klein bleiben.

Insbesondere beim Einsatz von Wälzlagern sollten deren Laufflächen zur Stabilisierung fest abgestützt werden. Um dennoch die erforderliche axiale Verschiebbarkeit der Kupplungsscheibe gegenüber der Stützachse zu gewährleisten, ist diese gemäß Anspruch 5 an einem gegenüber der Stützachse axial verschiebbaren Rohrstück abgestützt. An diesem Rohrstück sind die inneren Laufflächen der Wälzlager im Preßsitz gehalten, so daß eine einwandfreie Funktion der Wälzlager sichergestellt ist. Vorzugsweise greift am der Antriebswelle gegenüberliegenden Ende des Rohrstücks ein Verstellmechanismus an, der die erforderliche axiale Verschiebung des Rohrstücks und damit der verschiebbaren Kupplungsscheibe bewirkt.

Ist das Rohrstück gemäß Anspruch 6 gegenüber der Stützachse drehfest ausgebildet, so kann der stationär am Rahmen abgestützte Verstellmechanismus besonders einfach am Rohrstück angreifen, um über die Lager die axial verschiebbare Kupplungsscheibe zu verstellen.

Zur Übertragung der Drehbewegung von der axial verschiebbaren Kupplungsscheibe auf die Zapfwelle hat sich gemäß Anspruch 7 ein Zahnrad oder eine Riemenscheibe bewährt, die an der axial verstellbaren Kupplungsscheibe gehalten oder angeformt ist. Das Zahnrad bildet dabei vorzugsweise einen Teil eines Winkelgetriebes, so daß die Drehbewegung über eine in Längsrichtung zum Rasentraktor geführte Welle zum Fahrzeugheck oder zur Fahrzeugfront geführt werden kann. Es ist auch vorstellbar, eine Reihe miteinander kämmender Zahnräder zur Kraftübertragung zwischen der Kupplung und der Zapfwelle vorzusehen. Alternativ kann die Drehbewegung auch über einen Zahn- oder Keilriemen weitergeleitet werden, der an einer Riemenscheibe angreift.

Ein einfacher und gleichzeitig wirkungsvoller Mechanismus zur axialen Verschiebung der verstellbaren Kupplungsscheibe ergibt sich gemäß Anspruch 8, indem am Rohrstück bzw. am Wälzlager der axial verschiebbaren Kupplungsscheibe eine Platte angebracht ist. An dieser Platte greifen Nocken an, die diese axial zur Stützachse verstellen. Damit kann durch eine einfache Verdrehung der Nocken die erforderliche Verschiebung der Kupplungsscheibe erreicht werden, wobei die Betätigungskraft durch Wahl entsprechender Hebelverhältnisse klein gehalten werden kann.

Um ein Verkippen bzw. Verkanten des Rohrstücks zu vermeiden, sind die Nocken gemäß Anspruch 9 über ein Hebelgetriebe miteinander verbunden, das die Nocken miteinander synchronisiert. Die Verstellung des Rohrstücks erfolgt damit sehr präzise in axialer Richtung, so daß auch einseitige Abnützungen des Rohrstücks und der Stützachse verhindert werden, die die dauerhafte Funktionstüchtigkeit der Kupplung beeinträchtigen könnten.

Im einfachsten Fall werden die Nocken gemäß Anspruch 10 durch einen Bowdenzug verstellt, dessen Mantel am Rahmen abgestützt ist. Vorzugsweise werden die Kupplungsscheiben bei entlastetem Bowdenzug von einer Feder auseinandergedrückt, um den Kraftschluß zwischen dem Motor und der Zapfwelle zu unterbrechen, wenn der Bowdenzug nicht betätigt wird.

Bedingt durch die vertikale Ausrichtung der Antriebswelle des Motors befindet sich die Kupplung in der Regel unmittelbar unterhalb des Motors, so daß insbesondere im Mähbetrieb einer Verunreinigung der Kupplung durch Mähgut vorzubeugen ist. Es ist daher wichtig, die Kupplung derart auszubilden, daß sie leicht gegenüber dem Mähgut geschützt werden kann. Außerdem ist im allgemeinen der für die Kupplung zur Verfügung stehende Raum in axialer Richtung sehr begrenzt, so daß komplizierte Dichtungssysteme im allgemeinen nicht untergebracht werden können. Zur Lösung dieses Problems ist es gemäß Anspruch 11 vorteilhaft, die Kupplung von einem Gehäuse zu umgeben. Dieses Gehäuse verhindert jegliches Eindringen von Schmutz, wobei das Abdichten des Gehäuses an der feststehenden Stützachse kein Problem darstellt.

Um den erfindungsgemäßen Rasentraktor möglichst universell einsetzen zu können, ist es gemäß Anspruch 12 vorteilhaft, wenn dieser mit einem Schlegelmäher, einer Kehrmaschine oder einem Vertikutierer ausrüstbar ist, wobei diese Geräte jeweils über die Kupplung und die Zapfwelle antreibbar sind. Diese Geräte werden dabei über eine Drei-Punkt-Aufhängung am Rasentraktor gehalten, so daß eine stabile Halterung dieser Geräte gewährleistet ist. Damit läßt sich der Rasentraktor auch zum Mähen von sehr hohem Gras bzw. Gestrüpp einsetzen, wofür das an und für sich vorgesehene Mähwerk nicht geeignet ist. Das Mähgut wird vorteilhaft vom Windflügelmesser des Rasentraktors angesaugt und in den Fangkorb geblasen. Durch den Einsatz des Rasentraktors mit einer Kehrmaschine bzw. einem Vertikutierer wird das Einsatzgebiet des Rasentraktors erweitert, so daß der Rasentraktor eine universelle, fahrbare Arbeitsmaschine ist.

Schließlich ist es gemäß Anspruch 13 vorteilhaft, an die Zapfwelle wahlweise einen Holzspalter oder eine Säge anzuschließen, so daß die Motorleistung auch für diese Geräte vorteilhaft nutzbar ist. Diese Geräte werden vorzugsweise stationär abgestellt.

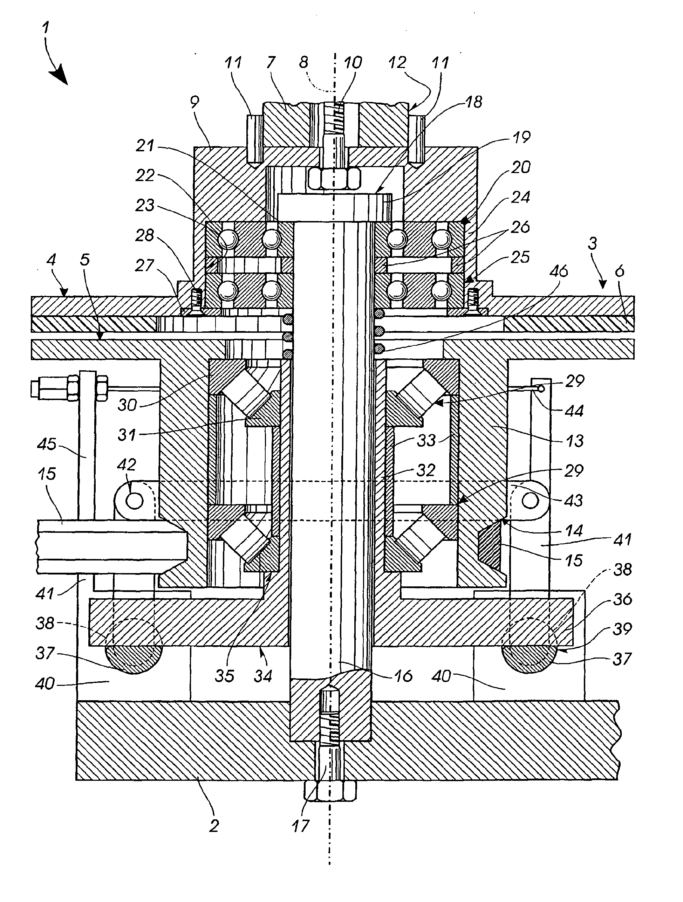

Der Erfindungsgegenstand wird beispielhaft anhand der Zeichnung erläutert, ohne den Schutzumfang zu beschränken.

Die einzige Figur zeigt eine Schnittdarstellung durch einen Ausschnitt eines Rasentraktors 1. Der Rasentraktor 1 weist einen Rahmen 2 auf, an dem eine Kupplung 3 abgestützt ist.

Die Kupplung 3 besteht aus zwei Kupplungsscheiben 4, 5, zwischen denen ein Kupplungsbelag 6 vorgesehen ist. Die obere Kupplungsscheibe 4 ist drehfest mit einer Antriebswelle 7 eines nicht dargestellten Verbrennungsmotors verbunden, und die eine vertikale Achse 8 aufweist. Die Kupplungsscheiben 4, 5 sind rotationssymmetrisch mit zur Achse 8 der Antriebswelle 7 fluchtender Achse ausgebildet. Die Kupplungsscheibe 4 weist eine zentrale Bohrung 9 auf, die von einer Schraube 10 durchsetzt ist. Diese Schraube 10 sorgt für einen festen Halt der Kupplungsscheibe 9 an der Antriebswelle 7. Zur Realisierung einer ausreichend sicheren Drehmomentübertragung zwischen der Antriebswelle 7 und der oberen Kupplungsscheibe 4 sind in der Kupplungsscheibe 4 zwei Stifte 11 gehalten, die axial über die Kupplungsscheibe 4 überstehen. Diese Stifte 11 ergreifen die Antriebswelle 7 an abgefrästen Flächen 12, wodurch eine sichere Drehmomentübertragung gewährleistet ist.

Die untere Kupplungsscheibe 5 ist gegenüber der oberen Kupplungsscheibe 4 verdrehbar und axial gelagert. In der dargestellten Lage der unteren Kupplungsscheibe 5 ist diese vom Kupplungsbelag 6 geringfügig beabstandet, so daß der Kraftweg von der Antriebswelle 7 zur unteren Kupplungsscheibe 5 unterbrochen ist. Wird die Kupplungsscheibe 5 nach oben verstellt und gegen die Kupplungsscheibe 4 gedrückt, so ergibt sich eine kraftschlüssige Verbindung zwischen beiden Kupplungsscheiben 4, 5.

An der unteren Kupplungsscheibe 5 ist ein Rohrstutzen 13 angeformt, in den eine trapezförmige Ringnut 14 eingeformt ist. Diese Ringnut 14 bildet eine Riemenscheibe 14 für einen Keilriemen 15, der die Drehbewegung der unteren Kupplungsscheibe 5 auf eine nicht dargestellte, front- oder heckseitige Zapfwelle überträgt.

Um sowohl radiale als auch axiale Kräfte der Kupplung 3 von der Antriebswelle 7 fernzuhalten, ist am Rahmen 2 eine Stützachse 16 mittels einer Schraube 17 festgelegt, die axial fluchtend zur Antriebswelle 7 ausgerichtet ist. Am der Antriebswelle 7 zugewandten Ende 18 der Stützachse 16 ist eine radiale Erweiterung 19 vorgesehen, die als kraftschlüssige Anlage eines Kugellagers 20 dient. Eine innere Lauffläche 21 dieses Kugellagers 20 ist dabei radial an der Stützachse 16 und axial am Vorsprung der radialen Erweiterung 19 im Preßsitz gehalten. Eine äußere Lauffläche 22 des Kugellagers 20 ist an einer Innenwandung 23 eines topfförmig ausgebildeten Bereichs 24 der oberen Kupplungsscheibe 4 im Preßsitz gehalten. Damit ist das Kugellager 20 beidseits gehalten, so daß eine günstige radiale Abstützung der oberen Kupplungsscheibe 4 gegeben ist.

Um ein Verkippen der Kupplungsscheibe 4 zu verhindern, ist ein weiteres Kugellager 25 vorgesehen, das über Ringe 26 vom Kugellager 20 axial beabstandet ist. Dieses weitere Kugellager 25 ist ebenfalls einerseits an der Stützachse 16 und andererseits an der Innenwandung 23 abgestützt. Um die beiden Kugellager 20, 25 sicher zu halten, ist an der oberen Kupplungsscheibe 4 eine Sicherungsplatte 27 mittels Schrauben 28 festgelegt, die die äußere Lauffläche 22 des Kugellagers 25 nach oben drückt. Zur Erzielung einer ausreichend sicheren radialen Abstützung der oberen Kupplungsscheibe 4 an der Stützachse 16 sind die beiden Kugellager 20, 25 jeweils als Doppelkugellager ausgebildet.

Zur radialen Abstützung der unteren Kupplungsscheibe 5 sind Schrägrollenlager 29 vorgesehen, deren äußere Laufflächen 30 am Rohrstutzen 13 der Kupplungsscheibe 5 und deren innere Laufflächen 31 an einem Rohrstück 32 im Preßsitz abgestützt sind. Alternativ können in einer vereinfachten Ausführungsform statt der Schrägrollenlager auch herkömmliche Kugellager eingesetzt werden, wenn diese die erforderlichen axialen Schubkräfte übertragen können. Um ein Verkippen der unteren Kupplungsscheibe 5 zu verhindern, sind die beiden Schrägrollenlager 29 durch Ringe 33 gegeneinander axial auf Abstand gehalten. Das Rohrstück 32 ist gegenüber der Stützachse 16 in axialer Richtung verschiebbar jedoch nicht verdrehbar gehalten, so daß die inneren Laufflächen 31 der Schrägrollenlager 29 fest abgestützt sind.

Die Schrägrollenlager 29 sind derart ausgebildet, daß sie neben radialen Kräften auch in Richtung auf die Antriebswelle 7 gerichtete Schubkräfte vom Rohrstück 32 auf die untere Kupplungsscheibe 5 übertragen können. Um die untere Kupplungsscheibe 5 gegen die obere Kupplungsscheibe 4 zu drücken, reicht daher eine axiale Verschiebung des sich nicht drehenden Rohrstücks 32 nach oben aus, wobei die Schrägrollenlager 29 diese Kraft bei geringer Drehreibung übertragen.

Am Rohrstück 32 ist im Bereich des der Antriebswelle 7 gegenüberliegenden Endes 34 ein Absatz 35 vorgesehen, an dem die innere Lauffläche 31 des Rollenlagers 29 axial abgestützt ist. Über diesen Absatz 35 wird eine auf das Rohrstück 32 ausgeübte axiale Schubkraft über die Rollenlager 29 auf die untere Kupplungsscheibe 5 übertragen, so daß die Kupplung durch axiales Verschieben des sich nicht drehenden Rohrstücks 32 betätigbar ist.

Um das Rohrstück 32 axial gegenüber dem Rahmen 2 bzw. der Stützachse 16 verschieben zu können, ist am unteren Ende 34 am Rohrstück 32 eine Platte 36 gehalten oder einstükkig angeformt. Diese Platte 36 ist unterseitig von zwei Nocken 37 abgestützt, die von im Teilbereich abgefrästen Wellen 38 gebildet sind. Die Kanten 39 der Nocken 37 sind abgerundet, um eine Kerbwirkung der Nocken 37 an der Platte 36 zu verhindern. Die Nocken 37 sind in Lagern 40 drehbar abgestützt, die am Rahmen 2 gehalten sind. Die Nocken 37 sind mit Hebelarmen 41 drehfest verbunden, deren obere Enden 42 durch einen Verbindungshebel 43 gelenkig verbunden sind. Dieser Verbindungshebel 43 sorgt für eine Synchronisation der beiden Nocken 37, so daß beide Nocken 37 stets die gleiche Winkellage einnehmen. Auf diese Weise ist sichergestellt, daß die Platte 36 und damit das Rohrstück 32 stets axial zur Stützachse 16 verschoben wird. Es ist auch vorstellbar, statt der Platte 36 lediglich einen Steg an das Rohrstück anzuformen oder daran zu halten, der auf den Nocken abgestützt ist.

Einer der Hebelarme 41 der Nocken 37 ist oberseitig über die Anlenkung des Verbindungshebels 43 hinaus verlängert, wobei am oberen Ende dieses Hebelarms 41 ein Bowdenzug 44 angreift. Die Hülle des Bowdenzugs ist dabei an einem Flansch 45 abgestützt, der stationär am Rahmen 2 gehalten ist. Durch Betätigen des Bowdenzugs 44 wird der Hebelarm 41 um das Lager 40 verschwenkt, so daß die rechte Nocke 37 die Platte 36 axial nach oben verschiebt. Über den Verbindungshebel 43 und den linken Hebelarm 41 wird auch die linke Nocke 37 entsprechend verschwenkt, so daß ein Verkanten des Rohrstücks 32 gegenüber der Stützachse 16 zuverlässig verhindert wird. Um beim Entspannen des Bowdenzuges 44 die beiden Kupplungsscheiben 4, 5 sicher voneinander zu trennen, ist in der Kupplung 3 eine Feder 46 vorgesehen, die einerseits am Rohrstück 32 und andererseits an der inneren, stillstehenden Lauffläche 21 des Kugellagers 25 abgestützt ist. Alternativ könnte die Feder 46 auch im Bereich des Bowdenzugs 44 oder im Bereich des Hebelgetriebes 41, 43 vorgesehen sein, ohne die Funktion der Kupplung 3 zu verändern.

### Bezugszeichenliste

- 1: Rasentraktor
- 2: Rahmen
- 3: Kupplung
- 4, 5: Kupplungsscheibe
- 6: Kupplungsbelag
- 7: Antriebswelle
- 8: Achse
- 9: Bohrung
- 10: Schraube
- 11: Stift
- 12: Fläche
- 13: Rohrstutzen
- 14: Riemenscheibe
- 15: Keilriemen
- 16: Stützachse
- 17: Schraube
- 18: Ende der Stützachse
- 19: Radiale Erweiterung der Stützachse
- 20: Kugellager
- 21: Innere Lauffläche des Kugellagers
- 22: Äußere Lauffläche des Kugellagers
- 23: Innenwandung
- 24: Topfförmiger Bereich
- 25: Kugellager
- 26: Ring
- 27: Sicherungsplatte
- 28: Schraube
- 29: Schrägrollenlager

- 30: Äußere Lauffläche des Schrägrollenlagers
- 31: Innere Lauffläche des Schrägrollenlagers
- 32: Rohrstück
- 33: Ring
- 34: Ende des Rohrstücks
- 35: Absatz
- 36: Platte
- 37: Nocke
- 38: Welle
- 39: Kante der Nocke
- 40: Lager
- 41: Hebelarm
- 42: oberes Ende des Hebelarms
- 43: Verbindungshebel
- 44: Bowdenzug
- 45: Flansch
- 46: Feder

## Patentansprüche

1. Rasentraktor, bestehend aus einem Rahmen (2), an dem ein Motor mit vertikaler Antriebswelle (7) abgestützt ist, die ein Mähwerkzeug antreibt, wobei die Antriebswelle (7) mit einer front- oder heckseitigen Zapfwelle zum Anschluß von Arbeitsgeräten über mindestens eine Kupplung (3) in Wirkverbindung steht, **dadurch gekennzeichnet, daß** die Kupplung (3) eine axial mit der Antriebswelle (7) fluchtende, fest am Rahmen (2) gehaltene, drehfeste Stützachse (16) aufweist, an der zwei Kupplungsscheiben (4, 5) drehbar abgestützt sind, von denen eine drehfest mit der Antriebswelle (7) verbunden ist, und die andere mit der Zapfwelle in Wirkverbindung steht und axial verschiebbar gehalten ist.

2. Rasentraktor nach Anspruch 1, **dadurch gekennzeichnet, daß** die Stützachse (16) an ihrem der Antriebswelle (7) zugewandten Ende (18) radial erweitert ist.

3. Rasentraktor nach Anspruch 1 oder 2, **dadurch gekennzeichnet, daß** mindestens eine der Kupplungsscheiben (4, 5) über mindestens ein Wälzlager (20, 25, 29) an der Stützachse (16) abgestützt ist.

4. Rasentraktor nach Anspruch 3, **dadurch gekennzeichnet, daß** die axial verschiebbare Kupplungsscheibe (5) über Zylinder- oder Kegelrollenlager (29) abgestützt ist, wobei die Rollenachsen spitze Winkel mit der Stützachse (16) einschließen.

5. Rasentraktor nach mindestens einem der Ansprüche 1 bis 4, **dadurch gekennzeichnet, daß** die axial verschiebbare Kupplungsscheibe (5) an einem axial gegenüber der Stützachse (16) verschiebbaren Rohrstück (32) abgestützt ist.

6. Rasentraktor nach Anspruch 5, **dadurch gekennzeichnet, daß** das Rohrstück (32) gegenüber der Stützachse (16) drehfest gehalten ist.

7. Rasentraktor nach mindestens einem der Ansprüche 1 bis 6, **dadurch gekennzeichnet, daß** an der axial verschiebbaren Kupplungsscheibe (5) ein Zahnrad oder eine Riemenscheibe (14) gehalten oder angeformt ist.

8. Rasentraktor nach mindestens einem der Ansprüche 1 bis 7, **dadurch gekennzeichnet, daß** am Rohrstück (32) und/oder am Wälzlager (29) der axial verschiebbaren Kupplungsscheibe (5) eine Platte (36) oder ein Steg angebracht ist, die/der über mindestens eine Nocke (37) axial zur Stützachse (16) verstellbar ist.

9. Rasentraktor nach Anspruch 8, **dadurch gekennzeichnet, daß** die Nocken (37) in fest am Rahmen (2) gehaltenen Lagern (40) abgestützt sind, die über ein Hebelgetriebe (41, 43) verbunden sind.

10. Rasentraktor nach Anspruch 8 oder 9, **dadurch gekennzeichnet, daß** die Nocken (37) durch einen Bowdenzug (44) verstellbar sind.

11. Rasentraktor nach mindestens einem der Ansprüche 1 bis 10, **dadurch gekennzeichnet, daß** die Kupplung (3) durch ein Gehäuse gekapselt ist.

12. Rasentraktor nach mindestens einem der Ansprüche 1 bis 11, **dadurch gekennzeichnet, daß** an die Zapfwelle wahlweise ein Schlegelmäher, eine Kehrmaschine oder ein Vertikutierer anschließbar ist, die/der über eine Drei-Punkt-Aufhängung am Rasentraktor gehalten ist.

13. Rasentraktor nach mindestens einem der Ansprüche 1 bis 12, **dadurch gekennzeichnet, daß** an die Zapfwelle wahlweise ein Holzspalter oder eine Säge anschließbar ist.

## Claims

1. Lawn tractor, comprising a frame (2) on which there is supported a motor having a vertical drive shaft (7) driving a mowing tool, the drive shaft (7) being operatively connected by at least one clutch (3) to a front-side or rear-side power take-off shaft for the connection of work tools, **characterized in that** the clutch (3) has a rotationally fixed support axle (16) which is axially aligned with the drive shaft (7) and is held fixedly on the frame (2) and on which two clutch discs (4, 5) are rotatably supported, one of which is connected in a rotationally fixed manner to the drive shaft (7) and the other of which is operatively connected to the power take-off shaft and is held in an axially displaceable manner.

2. Lawn tractor according to Claim 1, **characterized in that** the support axle (16), at its end (18) facing the drive shaft (7), is radially widened.

3. Lawn tractor according to Claim 1 or 2, **characterized in that** at least one of the clutch discs (4, 5) is supported on the support axle (16) by at least one roller bearing (20, 25, 29).

4. Lawn tractor according to Claim 3, **characterized in that** the axially displaceable clutch disc (5) is supported by cylindrical or taper roller bearings (29), the roller axes forming acute angles with the support axle (16).

5. Lawn tractor according to at least one of Claims 1 to 4, **characterized in that** the axially displaceable clutch disc (5) is supported on a pipe section (32) which is axially displaceable relative to the support axle (16).

6. Lawn tractor according to Claim 5, **characterized in that** the pipe section (32) is held in a rotationally fixed manner relative to the support axle (16).

7. Lawn tractor according to at least one of Claims 1 to 6, **characterized in that** a gearwheel or a belt pulley (14) is held on or formed onto the axially displaceable clutch disc (5).

8. Lawn tractor according to at least one of Claims 1 to 7, **characterized in that** attached to the pipe section (32) and/or to the roller bearing (29) of the axially displaceable clutch disc (5) is a plate (36) or a web, which can be adjusted axially to the support axle (16) by means of at least one cam (37).

9. Lawn tractor according to Claim 8, **characterized in that** the cams (37) are supported in bearings (40) which are held fixedly on the frame (2) and are connected by a lever gearing (41, 43).

10. Lawn tractor according to Claim 8 or 9, **characterized in that** the cams (37) are adjustable by a Bowden cable (44).

11. Lawn tractor according to at least one of Claims 1 to 10, **characterized in that** the clutch (3) is encapsulated by a housing.

12. Lawn tractor according to at least one of Claims 1 to 11, **characterized in that** to the power take-off shaft there can be connected, according to choice, a flail mower, a mechanical sweeper or a scarifier, which is held on the lawn tractor by a three-point-suspension.

13. Lawn tractor according to at least one of Claims 1 to 12, **characterized in that** to the power take-off shaft there can be connected, according to choice, a wood splitter or a saw.

## Revendications

1. Tracteur-tondeuse, constitué d'un châssis (2) sur lequel est supporté un moteur avec un arbre d'entraînement vertical (7), qui entraîne un outil de tonte, l'arbre d'entraînement (7) étant en liaison coopérante avec un arbre de prise de force du côté avant ou arrière pour le raccordement d'appareils de travail par le biais d'au moins un embrayage (3), **caractérisé en ce que** l'embrayage (3) présente un axe de support (16) fixe en rotation, maintenu fixement sur le châssis (2), en affleurement axial avec l'arbre d'entraînement (7), sur lequel sont supportés à rotation deux disques d'embrayage (4, 5), dont un est connecté de manière solidaire en rotation à l'arbre d'entraînement (7) et l'autre est en liaison coopérante avec l'arbre de prise de force et est maintenu de manière déplaçable axialement.

2. Tracteur-tondeuse selon la revendication 1, **caractérisé en ce que** l'axe de support (16) est élargi radialement à son extrémité (18) tournée vers l'arbre d'entraînement (7).

3. Tracteur-tondeuse selon la revendication 1 ou 2, **caractérisé en ce qu'**au moins l'un des disques d'embrayage (4, 5) est supporté par le biais d'au moins un palier à roulement (20, 25, 29) sur l'axe de support (16).

4. Tracteur-tondeuse selon la revendication 3, **caractérisé en ce que** le disque d'embrayage (5) déplaçable axialement est supporté par le biais de paliers à cylindres ou à rouleaux coniques (29), les axes des rouleaux formant des angles aigus avec l'axe de support (16).

5. Tracteur-tondeuse selon l'une quelconque des revendications 1 à 4, **caractérisé en ce que** le disque d'embrayage (5) déplaçable axialement est supporté sur une pièce tubulaire (32) déplaçable axialement par rapport à l'axe de support (16).

6. Tracteur-tondeuse selon la revendication 5, **caractérisé en ce que** la pièce tubulaire (32) est maintenue solidaire en rotation par rapport à l'axe de support (16).

7. Tracteur-tondeuse selon au moins l'une quelconque des revendications 1 à 6, **caractérisé en ce qu'**une roue dentée ou une poulie à courroie (14) est maintenue ou formée sur le disque d'embrayage (5) déplaçable axialement.

8. Tracteur-tondeuse selon au moins l'une quelconque des revendications 1 à 7, **caractérisé en ce qu'**une plaque (36) ou une aile est montée sur la pièce tubulaire (32) et/ou sur le palier à roulement (29) du disque d'embrayage (5) déplaçable axialement, laquelle peut être déplacée par le biais d'au moins une came (37) axialement par rapport à l'axe de support (16).

9. Tracteur-tondeuse selon la revendication 8, **caractérisé en ce que** les cames (37) sont supportées dans des paliers (40) maintenus fixement sur le châssis (2), qui sont connectés par le biais d'un mécanisme à levier (41, 43).

10. Tracteur-tondeuse selon la revendication 8 ou 9, **caractérisé en ce que** les cames (37) peuvent être déplacées par un câble Bowden (44).

11. Tracteur-tondeuse selon au moins l'une quelconque des revendications 1 à 10, **caractérisé en ce que** l'embrayage (3) est encapsulé par un boîtier.

12. Tracteur-tondeuse selon au moins l'une quelconque des revendications 1 à 11, **caractérisé en ce que** l'on peut raccorder à l'arbre de prise de force au choix une faucheuse à fléaux, une balayeuse, ou un verticuteur, qui est maintenu(e) par le biais d'une suspension à trois points sur le tracteur-tondeuse.

13. Tracteur-tondeuse selon au moins l'une quelconque des revendications 1 à 12, **caractérisé en ce que** l'on peut raccorder à l'arbre de prise de force au choix un fendeur de bois ou une scie.
